(19) **Europäisches Patentamt**
**European Patent Office**
**Office européen des brevets**

(11) **EP 2 594 754 B1**

(12) **EUROPEAN PATENT SPECIFICATION**

(45) Date of publication and mention
of the grant of the patent:
**07.03.2018 Bulletin 2018/10**

(51) Int Cl.:
*F01K 13/02* *(2006.01)* *F24D 19/10* *(2006.01)*
*F25B 27/00* *(2006.01)* *G05D 23/00* *(2006.01)*

(21) Application number: **12193120.8**

(22) Date of filing: **16.11.2012**

(54) **A control method for heat and electric power production**

Steuerungsverfahren zur Erzeugung von Wärme und elektrischem Strom

Procédé de commande de production d'énergie thermique et électrique

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.11.2011 IT TO20111059**

(43) Date of publication of application:
**22.05.2013 Bulletin 2013/21**

(73) Proprietor: **GE Avio S.r.l.**
**Rivalta di Torino (Torino) (IT)**

(72) Inventor: **Cipriani, Marco**
**10135 Torino (IT)**

(74) Representative: **Bergadano, Mirko et al**
**Studio Torta S.p.A.**
**Via Viotti, 9**
**10121 Torino (IT)**

(56) References cited:
**EP-A2- 1 628 093      EP-A2- 1 628 094
EP-A2- 1 677 051      DE-A1-102007 013 225
JP-A- 2000 146 257    US-A1- 2005 284 946**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a control method for heat and electric power production.

In particular, the present invention relates to a control method in a system provided with a cogenerator, conveniently a micro-cogenerator, i.e. a machine producing electric power for an overall power below 50 kW.

As known, the term "cogeneration" means the combined production of heat and electric power by means of a machine comprising an electric power generator and an engine, defined by an endothermic engine or a micro-turbine. The engine is supplied with fuel, generally methane gas, and generates mechanical power for feeding the generator in rotation, which in turn produces electric power. The engine also produces heat, which is delivered to a thermal user in the form of fluid at a relatively high temperature.

Compared to the separate production of the same amounts of electric power and heat, the combined production, if effective, requires lower fuel consumption and thus a reduction in polluting emissions, lower release of residual heat to the environment, lower use of the domestic mains, and increase in the efficiency as compared to traditional boilers.

Known cogenerators are used in a dedicated manner for generating electric power to be supplied to the domestic mains or to a possible user, whereas the heat produced by the engine has a secondary importance. In particular, known cogenerators are controlled through on-off operating cycles, by operating the engine at full speed for optimizing the electric generator operation. EP 1 628 094 discloses a prior art cogenerative system. However, the need of using cogenerators in housing complexes, where the production of electric power has a secondary importance, is also felt because the sale of electric power to the domestic mains is of relatively little profit.

The above-described known solutions are disadvantageous if used in housing complexes since they have no electronic system for closed-loop controlling the operation of the thermal part and following a variable heat request instant by instant, since they have basically been created for producing electric power.

In fact, heat is supplied according to predetermined hourly usage tables (for example: the engine may be switched on at 6:00am and switched off at 10:00am, thus operating at full speed and giving a heat peak). However, these operating cycles do not take into account the actual heat requirement of the thermal user, which may vary continuously irrespective of the hourly tables. For example, the actual requirement of the thermal user varies according to the actual environmental temperature, so there is not always an exact match between heat production and actual demand.

Moreover, the known cogeneration systems consist of a number of modules which are controlled separately, without being integrated and efficiently controlled. For example, if the thermal user requires a higher heat amount than the engine can provide, the known solutions suggest the provision of additional boiler(s) arranged in parallel with respect to the cogenerator. However, such a configuration requires additional fuel consumption; moreover, as mentioned above, boilers are controlled irrespective of the cogenerator, so there is not an optimal, efficient integration in the heat control and supply.

The object of the present invention is to provide a control method for heat and electric power production, which allows the abovementioned problems to be solved in a simple, inexpensive manner.

According to the present invention, a control method for heat and electric power production is provided as defined in claim 1.

The invention will now be described with reference to the accompanying drawings, which show a non-limiting embodiment thereof, in which:

- figure 1 shows a diagram of a preferred embodiment of the control method for heat and electric power production according to the present invention;
- figure 2 shows the diagram of a cogenerator controlled according to the method of the present invention; and
- figure 3 is a graph showing a total cost function used according to an aspect of the control method of the present invention.

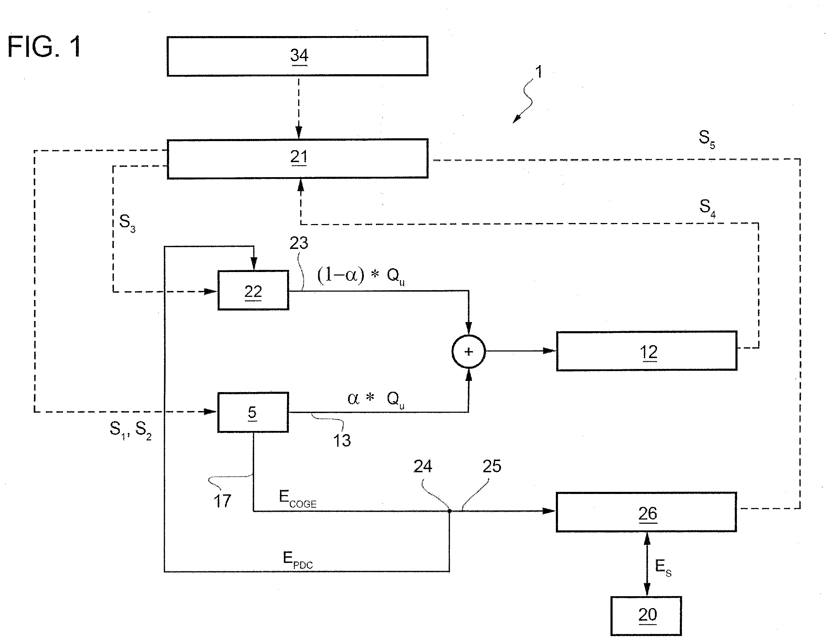

With reference to figure 1, reference numeral 1 indicates a system for heat and electric power production (schematically shown), which is used in a housing complex, e.g. a block of flats.

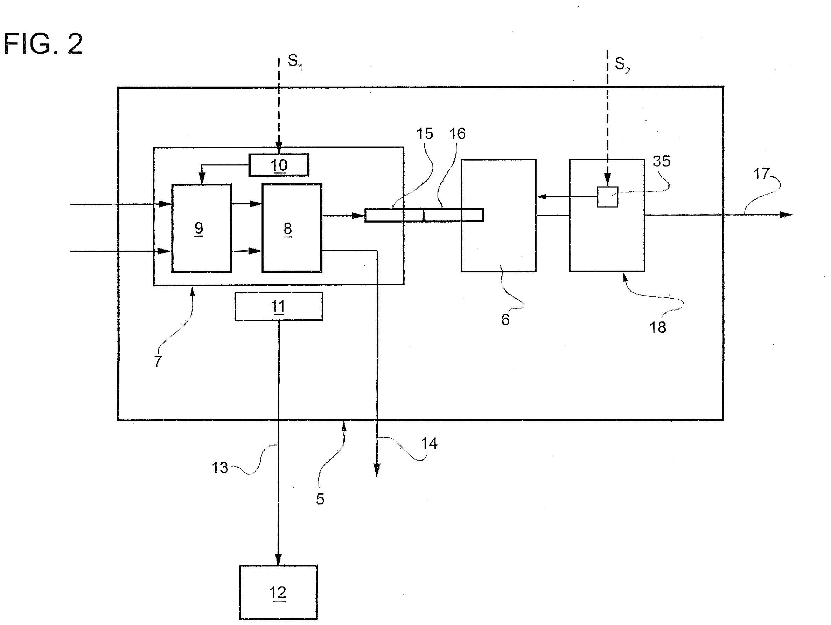

With reference to figure 2, system 1 comprises a single cogenerator 5, in particular a micro-cogenerator, i.e. a machine capable of producing an amount of electric power of at most 50 kW.

Cogenerator 5 comprises an electric generator 6 and an engine 7, in particular an internal combustion engine, which comprises at least one combustion chamber 8, a feeding system 9 for introducing combustion air and fuel (in particular methane gas) into chamber 8, and an electronic control unit 10. In particular, the control unit 10 operates system 9 for setting a given flow rate of fuel and combustion air in response to a control signal S1, sent by an electronic control unit 21, described in more detail below. In particular, the control unit 10 is that typical in an electronic injection, internal combustion engine but the operation thereof depends on the general control provided by unit 21, which serves a function of general supervisor and controller over the operating parameters and safety condition of the whole system 1.

The exhaust gases generated in chamber 8 exit from engine 7 through a venting system 14 at a relatively high temperature, e.g. 600 °C.

Using the combustion energy, engine 7 generates mechanical energy and heat. A portion of such heat is collected by the exchangers 11, which are associated with an engine cooling system (not shown) and/or with the venting system 14.

The heat collected by the exchangers 11 is supplied to a thermal user 12 (defined by the heating radiators of the above housing complex, for example) by means of a system 13 in the form of a heat carrier fluid (e.g. air or water) at a higher temperature than the environmental temperature.

On the other hand, the mechanical energy is supplied, by means of a rotating shaft 15 of engine 7, to a rotor 16 of the generator 6 for generating electric power, which is supplied by the cogenerator 5 through an electric output line 17.

Preferably, generator 6 is of the "direct-drive" type, i.e. operated without transmission by shaft 15. In particular, generator 6 is an electric machine of the type indicated in the international patent applications published with No. WO2009093181 and No. WO2009093183, the description of which is incorporated herein at least for the parts required to understand and implement the present invention.

Cogenerator 5 further comprises a converter 18, which is arranged between generator 6 and line 17, and converts the electric power generated by generator 6 into alternating current power at a predetermined voltage and at a constant electric frequency value, equal to that of the domestic mains 20 (figure 1), irrespective of the rotation speed of rotor 16 and of the resistant torque exerted by rotor 16 on shaft 15.

Preferably, converter 18 is bidirectional, i.e. it allows the generator 6 to be also operated as a starter of engine 7 under the electric supply of mains 20, without using dedicated motors and batteries for the start up.

Converter 18 transfers an electric current value to line 17, which value can vary in response to a control signal S2, so as to vary in turn the resistant torque exerted by rotor 16 on shaft 15.

With reference to figure 1, the control signals S1 and S2 are supplied by the electronic unit 21 of system 1, so as to operate the cogenerator 5 at a predetermined operating point, as will be better described below.

With reference to figure 1, line 17 supplies a heat pump 22, which supplies heat to a thermal user 12 by means of a system 13 in the form of a heat carrier fluid (for example air or water) at a higher temperature than the environmental temperature.

The heat flows transmitted by system 23 and by system 13 are preferably added to each other and then delivered as a single flow to user 12.

The heat pump 22 operates at a variable power, in response to a control signal S3 provided by unit 21. Unit 21 thus simultaneously manages cogenerator 5 and heat pump 22. In response to the control signal S3, which may vary continuously, the current and hence the electric power absorbed by the heat pump 22 from line 17 vary according to the heat supplied to the fluid of system 23.

In order to improve the efficiency and/or when the external temperature is relatively low, the heat pump 22 preferably withdraws heat from the exhaust gases generated by engine 7: for example, the heat pump 22 has an inlet (not shown) communicating with system 14. According to a possible option, the heat pump 22 withdraws heat from the underground.

The electric connection between heat pump 22 and line 17 defines a node 24, which has another output, indicated by reference numeral 25, and connected to the electric users 26 of the housing complex.

Therefore, by subtracting the current absorption of the heat pump 22, if a fraction of the electric power dispensed by cogenerator 5 optionally remains at the output 25, such a fraction may be used by users 26.

A network filter and overload protection fuse limiters (not shown) are also provided on line 17.

Users 26 are however connected to mains 20 for absorbing electric power from the same mains 20.

In particular cases, when the electric power at the output 25 is higher than the requirement from users 26, the excess power may optionally be sold to mains 20 or be collected in electric power storage batteries or cells.

As an alternative to the connection to users 26, output 25 is connected to electric power storage batteries or cells. Thereby, the electric part of system 1 is insulated from any external electric component. The storage cells collect the excess electric power with respect to the amount absorbed by the heat pump 22, and supply the stored electric power to the heat pump 22 itself in case of energy request peaks and/or for optimizing the operation of engine 7 in order to minimize the operating costs (costs for fuel, maintenance costs due to wear of engine 7, etc.). The storage and supply of electric power of the storage cells are also managed by unit 21, either irrespective of the management of cogenerator 5 and heat pump 22 or in an integrated manner.

With reference again to figure 1, unit 21 monitors users 12 and 26, and controls cogenerator 5 and heat pump 22 in a centralized and automated manner according to the results of a calculation or algorithm, which allows target or set-point values to be obtained, corresponding to the thermal power to be supplied to user 12. Such a calculation is substantially carried out in "real time" in response to reference signals S4, S5 which indicate instant by instant the heat requirement Qu of user 12 and the electric power requirement Eu of users 26, respectively. In particular, the reference signals S4, S5 are directly emitted by users 12 and 26. As an alternative to the reference signals S4, S5, requirement Qu and requirement Eu are represented by predetermined values or profiles, stored on a memory in the form of tables or graphs as a function of time.

The algorithm which controls the operation of unit 21 allows target or set-point values to be established, related to heat and electric power that cogenerator 5 must supply. Unit 21 then controls motor 7 and heat pump 22 so as to reach such set-points.

The algorithm has the main purpose of meeting the requirement Qu of user 12, and determines the thermal powers that cogenerator 5 and heat pump 22 must deliver to reach such a target.

The sizing of the powers of engine 7 and heat pump 22 is also such as to meet the heat requirement of user 12 as primary target. In any case, unit 21 allows an optimal adjustment of heat pumps of any size and type to be obtained through the sale/purchase of the excess/lacking electric power.

In particular, the algorithm operates on the basis of the economic convenience. Therefore, in addition to requirements Qu and Eu, the algorithm also takes the following parameters into account:

- rates of fuel for engine 7, electric power and heat, stored on a memory 34 or provided to unit 21 from the outside, for example;
- any earnings resulting from economic/energy compensations;
- environmental temperature values defined by values stored on memory 34, such as values resulting from a forecast, or defined by values measured in real time;
- COP (coefficient of performance) of the heat pump 22, defined as the ratio of thermal energy supplied to system 23 to the work used (i.e. the electric power absorbed at node 24) ; in particular, COP is considered as a variable parameter, determined as a function of the above-mentioned environmental temperature values;
- ratio $\beta$ of the thermal power to the mechanical power delivered by engine 7; it coincides with the ratio of thermal to mechanical yields, intended as ratio of the (thermal or mechanical) powers to the fuel power.

According to a preferred embodiment, ratio $\beta$ is taken as a constant parameter (e.g. equal to 2.17) for simplicity.

The algorithm implemented in unit 21 determines the best distribution of requirement Qu among:

- the heat Q1 that cogenerator 5 must supply at the output, i.e. to system 13;
- the heat Q2 that the heat pump 22 must supply at the output, i.e. to system 23.

In other words, Q1 and Q2 represent target or set-point values that should be reached to optimize the operation of system 1. They are defined using a single variable parameter, i.e. ratio $\alpha$ of set-point Q1 to requirement Qu. Accordingly, in the conditions described where no heat storage cell is provided, quantity (1-$\alpha$) is equal to set-point Q2. Obviously, ratio $\alpha$ should be in the range between zero and one.

The algorithm determines the optimal value of ratio $\alpha$, i.e. a value $\alpha$opt, minimizing a total cost function which is defined by the sum of energy costs and earnings of system 1, on an hourly, monthly or annual basis. The algorithm attempts to at least partly meet requirement Eu as well, provided that requirement Qu is however covered.

The total cost function takes into account both the electric and thermal energy balance, in particular:

$$\mathtt{Ecoge\ -\ Epdc\ +\ Es\ =\ Eu}$$

where:

Ecoge = the output electric power supplied by cogenerator 5, i.e. on line 17, when the cogenerator supplies an output heat equal to set-point Q1; i.e., in symbols: Ecoge = Q1 / $\beta$ = ($\alpha$ * Qu) / $\beta$;

Epdc = electric power absorbed by the heat pump 22 when the heat pump 22 supplies an output heat equal to set-point Q2; i.e., in symbols: Epdc = Q2 / COP = (1 - $\alpha$) * Qu / COP

Es = electric power exchanged between users 26 and mains 20 (Es has a positive value if users 26 are absorbing, and thus electric power is acquired from mains 20, or negative if the electric power is transferred to mains 20).

The following results from the above relation:

$$\mathtt{Es\ =\ Eu\ -\ ((\alpha\ *\ Qu)\ /\ \beta)\ +\ (Qu\ *\ (1\ -\ \alpha)/COP)}$$

The total cost function is defined as the sum of the methane cost (with a possible exemption from tax according to the type of use, i.e. for heating or electric power production), the cost of any electric power bought from mains 20, and the earnings of any electric power sold to mains 20. In order to obtain the best operating compromise (always ensuring requirement Qu and trying to ensure requirement Eu), value $\alpha$opt is determined, which corresponds to the minimum of the total cost function.

The solution of this minimization calculation has some restrictions as the following disequations should be simultaneously met:

$$0 < \alpha opt \le 1$$

$$\alpha \le Ecogemax * \beta / Qu$$

$$\alpha \ge 1 - (Epdcmax * COP / Qu)$$

The first disequation is due to the definition of ratio $\alpha$; the second one is due to a maximum value Ecogemax of the electric power that cogenerator 5 is capable of generating (due to the maximum power thereof); and the third disequation is due to a maximum value Epdc of the electric power that the heat pump 22 absorbs (due to the maximum power thereof).

Moreover, it is preferable for the electric power Ecoge to be sufficient to cover the absorption of electric power Epdc by the heat pump 22, i.e. Ecoge > Epdc. If condition Ecoge < Epdc happens, it is necessary to include electric storage cell arrays, as described above, or buy electric power from mains 20 in order to feed the heat pump 22.

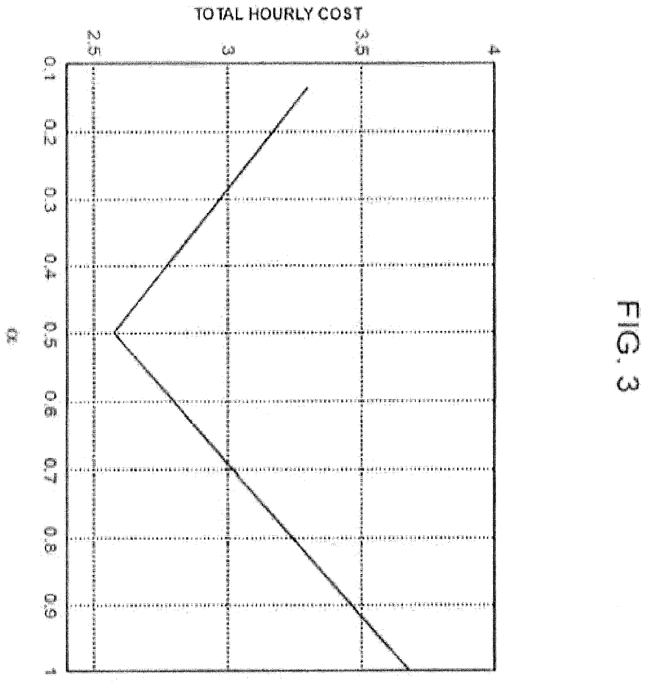

Figure 3 shows an exemplary diagram which represents the total cost function as a function of ratio $\alpha$, assuming that Qu = 60 kWh and Eu = 20 kWh. It may be noted that the pattern of the total cost function is defined by a broken line.

A threshold value or change point S exists for ratio $\alpha$, such that Es = 0. Below the threshold value S, the housing complex should buy electric power from mains 20, and for higher values it can sell electric power to mains 20. In particular:

$$S = (Eu + (Qu / COP)) / ((Qu / \beta) + (Qu / COP))$$

For the function shown in figure 3, we have:

S = 0.494
$\alpha$opt = 0.494
Ecoge = 13.6 kWh
Epdc = 11.6 kWh
Q1 = 29.6 kWh
Q2 = 30.4 kWh

In the case shown in figure 3, the minimum of the total cost function occurs exactly at value S. In other words, the electric power that the cogenerator 5 will generate after the adjustment will be completely used by heat pump 22 and users 26.

Through the calculated set-point Q1 and Q2 values, through the thermal capabilities involved and through temperature measurements, unit 21 calculates desired temperatures for the heat carrier fluid in systems 13, 23. Unit 21 exerts a control, preferably of the PID type, which according to the temperatures measured on the heat carrier fluid, determines set-points Pt1 and Pt2 corresponding to the thermal powers that engine 7 and heat pump 22 should deliver, respectively, in order to reach the desired temperatures of the heat carrier fluid itself.

If set-point Pt2 is higher than a threshold defined by the minimum thermal power that can be delivered by the heat pump 22, unit 21 continuously modulates the operation of the heat pump 22 through the control signal S3 so as to throttle the thermal power delivered by the heat pump 22 and thus deliver thermal power equal to set-point Pt2. If set-point Pt2 is lower than the above threshold, unit 21 controls the heat pump 22 with starting-up/shutting-off cycles, i.e. with a PWM (pulse-width modulation) technique, in particular with an operation at the minimum power.

With regard to engine 7, by dividing set-point Pt1 by ratio $\beta$, the algorithm calculates a set-point Pm corresponding to the mechanical power that engine 7 must deliver.

If set-point Pm is higher than a threshold defined by the minimum mechanical power that can be delivered by engine 7, unit 21 controls the engine through the control signal S1 so as to continuously modulate the rotation speed of engine 7, keeping it switched on, and hence so as to throttle the mechanical power delivered by engine 7 and reach set-point Pm.

In particular, set-point Pm and ratio β are entered as input data into a map or table which is stored in unit 21 and provides the optimal operating point of engine 7 as output data.

For example, the optimal operating point is defined by a set-point V', corresponding to the rotation speed at which engine 7 must operate, and by a set-point C corresponding to the resistant torque that must be exerted by generator 6.

At this point, in addition to controlling the control unit 10 for varying the supply to engine 7 and thus modulate the speed of engine 7, unit 21 controls the converter 18 so as to vary the output electric current so that the resistant torque exerted on shaft 15 is equal to set-point C.

As optimal operating point, the above map preferably provides a set-point of rotation speed V' which is coded into the control signal S2 and transmitted to converter 18, and a set-point A for feeding air/fuel to engine 7 (corresponding to the so-called opening of the throttle valve of system 9).

Unit 21 or control unit 10 preferably contains a control algorithm, for example PID, so that system 9 reaches set-point A. Thereby, the control variations in the transients on the supply of engine 7 are carried out and controlled so as to be "soft" and not sharp.

Moreover, converter 18 comprises a control module 35, where an algorithm is implemented for ensuring that the rotation speed of rotor 16 reaches set-point V'. The control module 35 receives the input set-point V' through the control signal S2, the measurement of the phase currents of generator 6, and the position information of rotor 16. According to these data, the algorithm of the control module 35 calculates an actuation control, defined by an electric voltage, which is applied by converter 18 to generator 6 for reaching set-point V'. Using a permanent magnet rotor 16 as shown in the example described, such an electric voltage is applied to some phases of the stator of generator 6. The variation of the electric control voltage causes a variation in the resistant torque on rotor 16 and thus a variation in the generated electric current.

As mentioned above, the control is carried out in real time, whereby the set-point values change according to the instant variations of the input data of unit 21.

On the other hand, if set-point Pm is lower than the above threshold (minimum mechanical power that can be delivered by engine 7), engine 7 is controlled so as to carry out starting-up/shutting-off cycles, i.e. with a pulse-width modulation (PWM), in particular with an operation at the minimum power.

With the pulse modulation (of cogenerator 5 only, or of cogenerator 5 and heat pump 22 assembly), the thermal capability of engine 7, exchangers 11, systems 13, 23 and user 12 is designed so as to be sufficient for dampening the oscillations of the heat provided by system 1.

According to a variant of the above-described algorithm, ratio β may be considered as a variable, since for different operating points of engine 7, ratio β is actually different and decreases by increasing the delivered torque of engine 7 (e.g. ratio β in some engines ranges between 1.5 and 4).

Since the total cost function also includes ratio β, in addition to ratio α, there are two variables. In other words, the total cost function has a three-dimensional graph and the calculation searches for the combination of optimal values for both ratios α, β, again for minimizing the total cost function. The rest of the algorithm remains unchanged, using the optimal value found for ratio β, rather than a constant value.

The advantages of the method for controlling system 1 become apparent from the above description.

Unit 21 is the supervisor that controls all the components of system 1 in a coordinated or integrated manner, in order to meet the requirements Eu and/or Qu and pursue an optimal operating condition.

The best configuration of the set-points of the single components allows maximum performances to be obtained and the usage cost (cost of methane, cost and earnings of the electric power) to be minimized according to a power throttling logic which tries to also take into account the electric requirement Eu, obviously respecting the coverage restriction of the thermal requirement Qu.

In general, unit 21 may also operate according to the following different operating modes:

A) pure thermal tracking: unit 21 is configured so as to meet requirement Qu without worrying about reaching the requirement Eu;

B) "smart" thermal tracking: unit 21 is configured so as to meet requirement Qu and, if there is an electric current peak, it simultaneously increases set-point Pm (with consequent increase of the heat generated, as well) in order to meet the electric requirement; once the peak period has ended, the previously defined set-point values are restored;

C) definition of an electric set-point: unit 21 is configured so as to meet an electric power value that is set by a user (via a keyboard or via telemanagement, for example); with regard to requirement Qu, the unit simply checks whether such a requirement Qu is higher than or equal to the heat generated;

D) calculation of an electric set-point: unit 21 is configured so as to meet an electric power value that is not configurable but that is periodically calculated by the unit 21 (and kept constant over a certain time window); the calculation takes place by means of a statistical analysis of the electric power absorbed by users 26); with regard to requirement Qu, unit 21 simply checks whether such a requirement Qu is higher than or equal to the heat generated.

The main advantage of system 1 is the provision of a hybrid system consisting of a cogenerator and a heat pump, and having the capability of meeting, as a primary target, the heat requests of user 12 and of being capable of choosing, instant by instant, the operating points of the two "machines" according to the instant requirement of user 12, thus trying to optimize the operation.

The provision of the heat pump 22 electrically powered directly by cogenerator 5 allows high performances and reduced fuel consumptions to be achieved, and thereby a saving in costs, compared to more modern condensation boilers.

The use of the heat pump 22 powered by cogenerator 5 allows the control logics to be simplified for meeting the heat requirement Qu and the control logics to be integrated for meeting also the electric power requirement Eu, provided that the heat pump 22 does not absorb all the electric power generated by cogenerator 5.

For medium-high powers, engine 7 is adjusted so as to modulate, i.e. throttle, the air/fuel supply while converter 18 is controlled through the control signal S2 for obtaining the desired operating point. Set-point Q1 is so obtained, which has been calculated by minimizing the total cost function. In other words, the control of converter 18 allows the operation of generator 6 to be adjusted and hence, together with the adjustment of the supply to engine 7, it allows the targets imposed by the control strategy to be pursued.

In the meantime, converter 18 releases the operation of generator 6 by the frequency of mains 20.

Moreover, the adjustment takes place continuously in order to reach the optimal set-point Q1 which is calculated in real time. This modulation allows the overall (thermal and mechanical) efficiency of engine 7 to be increased, thus minimizing the fuel, and the requirements of user 12 to be pursued correctly and in real time.

By controlling control unit 10, converter 18 and heat pump 22 all together, the desired operating point for engine 7 can be set, and such an operating point can be correlated with that of the heat pump 22 so as to split the requirement Qu between engine 7 and heat pump 22, and thus optimize such a splitting and the overall operation of system 1.

Moreover, ratio $\beta$, which actually is a variable parameter, may be optimized through the adjustment of the operating point of engine 7 through the control signals S1 and S2.

Therefore, in the practice, the operation of system 1 is automated for obtaining the best performance at a minimum cost and minimizing the carbon dioxide emissions, due to the lower fuel consumption.

Moreover, system 1 has a very flexible operation to ensure the heat requirement of the housing complex in any condition and in real time, and it implies a high simplicity not only in the management but in maintenance as well.

Determining the COP of the heat pump 22 according to the environmental temperature allows the operating point of cogenerator 5 and heat pump 22 to be optimally determined.

Finally, it is apparent from the above description that changes and variations may be made to the control method and system 1 described with reference to the accompanying figures, without departing from the scope of protection of the present invention, as defined in the appended claims.

In particular, heat storage cell(s) with phase change materials (PCMs) may be included in systems 13, 23 in order to meet higher heat requirements than the maximum thermal power of system 1, thus keeping the configuration of system 1 unchanged.

As mentioned above, system 1 may comprise either electric storage batteries or cells, or fuel cells, for feeding the heat pump 22, in parallel to cogenerator 5, so as to improve the efficiency of system 1 if it is not convenient to switch on engine 7, or for reducing noise at nighttime.

Moreover, requirement Qu may be determined according to a forecast made on the basis of environmental temperature measurements, weather forecasts and/or on the basis of historical data related to temperature and energy request, for example.

Moreover, rather than optimizing the operation in economic terms, the algorithm may find the heat/thermal power set-points so as to minimize the pollution produced or according to other factors; and/or unit 21 may operate without signal S5.

The electronic control unit 10 and unit 21 may be integrated in a single electronic processor.

Finally, the above-described configuration and algorithm may also be applied to systems having higher powers than 50 kW; and/or heat pump 22 can be also used for cooling the heat carrier fluid, in addition to the above-described heating mode.

**Claims**

1. A control method for heat and electric power production in a system (1) comprising:

   a) a cogenerator (5) comprising:

- an engine (7);
- an electric machine (6) operated by said engine for producing electric power;
- a converter (18) for transforming and supplying the electric power produced by said electric machine (6);

b) a heat pump (22) electrically supplied by said cogenerator (5);
c) control means (21) which control said cogenerator (5) and said heat pump (22);

the method comprising the steps of:

• determining an operating point of the engine (7) corresponding to a desired operating condition for the system (1);
• reaching said operating point by adjusting the supply of air/fuel to said engine (7) and by controlling said converter (18) so as to vary the resistant torque exerted by said electric machine (6) on said engine (7) .

2. A control method according to claim 1, **characterized by**:

a) defining a heat requirement (Qu);
b) determining a first set-point (Q1) corresponding to the heat that the engine (7) should deliver (5), and a second set-point (Q2) corresponding to the heat that the heat pump (22) should deliver, so as to split the heat production and meet said heat requirement (Qu);
c) determining said operating point so as to produce heat corresponding to said first set-point (Q1).

3. A control method according to claim 2, **characterized in that** the heat production is split according to an algorithm for minimizing a total cost function which is defined by the sum of power costs and earnings of said system (1) on the basis of rates for heat, electric power and fuel.

4. A control method according to claim 2 or 3, **characterized in that** said heat requirement is defined by an instantaneous heat request (S4) by a user (12).

5. A control method according to claim 4, **characterized by** continuously varying the rotational speed of said engine (7), at least in specific operating conditions, as a function of said first set-point (Q1), by adjusting the supply to said engine (7) and by controlling said converter (18).

6. A control method according to claim 5, **characterized in that** said first set-point (Q1) is determined so as to produce electric power (Ecoge) at least equal to that required to supply said heat pump (22) .

7. A control method according to claim 6, **characterized by** providing an electric user (26) or electric power storage cells with electric power produced by said cogenerator (5) in excess with respect to the electric power absorbed by said heat pump (22).

8. A control method according to any one of claims 2 to 7, **characterized by**:

a) determining a set-point of the mechanical power (Pm) that said engine must supply in order to provide heat equal to said first set-point (Q1) as a function of a ratio ($\beta$) of thermal and mechanical powers supplied by said engine (7);
b) determining a reference speed (V') that corresponds to said set-point of mechanical power (Pm);
c) adjusting the supply of said engine (7) and controlling said converter (18) so as to obtain a rotation speed equal to said reference speed (V').

9. A control method according to claim 8, **characterized in that** said ratio ($\beta$) of thermal and mechanical powers supplied by said engine (7) is a variable parameter which is optimized by seeking the minimum of a total cost function.

10. A control method according to any one of claims 2 to 9, **characterized by** operating said engine (7) with starting-up/shutting-off cycles if said first set-point (Q1) corresponds to a power below a first threshold.

11. A control method according to any one of claims 2 to 10, **characterized by** operating said heat pump (22) with starting-up/shutting-off cycles if said second set-point (Q2) corresponds to a power below a second threshold.

**12.** A control method according to any one of the preceding claims, **characterized by** determining the performance coefficient (COP) of said heat pump (22) as a function of environmental temperature values.

**13.** A control method according to any one of the preceding claims, **characterized in that** said converter (18) is of the bidirectional type, and **characterized by** starting up said engine (7) by using said electric machine (6) as a starter.

**Patentansprüche**

**1.** Ein Steuerungsverfahren zur Erzeugung von Wärme und elektrischer Leistung in einem System (1) umfassend:

a) ein Blockheizkraftwerk (5) umfassend:

- einen Motor (7);
- eine von dem Motor betriebene elektrische Maschine (6) zum Erzeugen von elektrischer Leistung;
- einen Wandler (18) zum Umwandeln und Weiterleiten der von der elektrischen Maschine (6) erzeugten elektrischen Leistung,

b) eine von dem Blockheizkraftwerk (5) mit Strom versorgte Wärmepumpe (22),
c) Steuerungsmittel (21) zum Steuern des Blockheizkraftwerks (5) und der Wärmepumpe (22),

wobei das Verfahren die folgenden Schritte umfasst:

• Bestimmen eines Betriebspunktes des Motors (7), der einem Soll-Betriebszustand des Systems (1) entspricht,
• Erreichen des Betriebspunktes durch Anpassen der Luft-/Treibstoff-Versorgung des Motors (7) und durch Steuern des Wandlers (18) derart, dass das von der elektrischen Maschine (6) auf den Motor (7) ausgeübte Widerstandsdrehmoment variiert wird.

**2.** Ein Steuerungsverfahren gemäß Anspruch 1, **gekennzeichnet durch:**

a) Ermitteln eines Wärmebedarfs (Qu);
b) Bestimmen eines ersten Sollwerts (Q1) entsprechend der Wärme, die der Motor (7) liefern sollte (5), und eines zweiten Sollwerts (Q2) entsprechend der Wärme, die die Wärmepumpe (22) liefern sollte, um die Wärmeerzeugung aufzuteilen und den Wärmebedarf (Qu) abzudecken;
c) Bestimmen des Betriebspunkts derart, dass Wärme entsprechend dem ersten Sollwert (Q1) erzeugt wird.

**3.** Ein Steuerungsverfahren gemäß Anspruch 2, **dadurch gekennzeichnet, dass** die Wärmeerzeugung gemäß eines Algorithmus zur Minimierung einer Gesamtkostenfunktion aufgeteilt wird, die sich anhand der Summe der Stromkosten und Erträge des Systems (1) auf der Basis von Wärme-, Strom- und Treibstofftarifen berechnet.

**4.** Ein Steuerungsverfahren gemäß Anspruch 2 oder 3, **dadurch gekennzeichnet, dass** der Wärmebedarf durch eine Momentan-Wärmeanforderung (S4) eines Nutzers (12) bestimmt wird.

**5.** Ein Steuerungsverfahren gemäß Anspruch 4, **gekennzeichnet durch** ein kontinuierliches Variieren der Drehzahl des Motors (7), zumindest unter bestimmten Betriebsbedingungen, in Abhängigkeit von dem ersten Sollwert (Q1) durch Anpassen der Versorgung des Motors (7) und durch Steuern des Wandlers (18).

**6.** Ein Steuerungsverfahren gemäß Anspruch 5, **dadurch gekennzeichnet, dass** der erste Sollwert (Q1) so festgelegt wird, dass elektrische Leistung (Ecoge) in einem Maß erzeugt wird, dass zumindest gleich dem ist, das zur Versorgung der Wärmepumpe (22) benötigt wird.

**7.** Ein Steuerungsverfahren gemäß Anspruch 6, **gekennzeichnet durch** ein Versorgen eines elektrischen Verbrauchers (26) oder von Speicherzellen für elektrische Leistung mit elektrischer Leistung, die von dem Blockheizkraftwerk (5) im Übermaß in Bezug auf die von der Wärmepumpe (22) aufgenommene elektrische Leistung erzeugt wurde.

**8.** Ein Steuerungsverfahren gemäß einem der Ansprüche 2 bis 7, **gekennzeichnet durch:**

a) ein Bestimmen eines Sollwerts von mechanischer Leistung (Pm), die der Motor bereitstellen muss, um in Abhängigkeit von einem Verhältnis (β) zwischen einer thermischen und einer mechanischen Leistung, die jeweils von dem Motor (7) geliefert wird, Wärme in einem Maß bereitzustellen, das gleich dem ersten Sollwert (Q1) ist;

b) Bestimmen einer Referenz-Geschwindigkeit (V'), die dem Sollwert der mechanischen Leistung (Pm) entspricht;

c) Anpassen der Versorgung des Motors (7) und Steuern des Wandlers (18) derart, dass eine Drehzahl gleich der Referenz-Geschwindigkeit (V') erreicht wird.

9. Ein Steuerungsverfahren gemäß Anspruch 8, **dadurch gekennzeichnet, dass** es sich bei dem Verhältnis (β) von thermischer zu mechanischer Leistung, die jeweils von dem Motor (7) geliefert wird, um einen variablen Parameter handelt, der durch Minimierung einer Gesamtkostenfunktion optimiert wird.

10. Ein Steuerungsverfahren gemäß einem der Ansprüche 2 bis 9, **gekennzeichnet durch** ein Betreiben des Motors (7) mit Anfahr-/Abschalt-Zyklen, wenn der erste Sollwert (Q1) einer Leistung unterhalb eines ersten Schwellenwerts entspricht.

11. Ein Steuerungsverfahren gemäß einem der Ansprüche 2 bis 10, **gekennzeichnet durch** ein Betreiben der Wärmepumpe (22) mit Anfahr-/Abschalt-Zyklen, wenn der zweite Sollwert (Q2) einer Leistung unterhalb eines zweiten Schwellenwerts entspricht.

12. Ein Steuerungsverfahren gemäß einem der vorigen Ansprüche, **gekennzeichnet durch** ein Bestimmen der Leistungszahl (LZ) der Wärmepumpe (22) in Abhängigkeit von der Umgebungstemperatur.

13. Ein Steuerungsverfahren gemäß einem der vorigen Ansprüche, **dadurch gekennzeichnet, dass** der Wandler (18) bidirektional arbeitet, und **gekennzeichnet durch** ein Anlassen des Motors (7) unter Verwendung der elektrischen Maschine (6) als Anlasser.

## Revendications

1. Procédé de commande pour production d'énergie thermique et électrique dans un système (1) comprenant :

   a) un cogénérateur (5) comprenant :

      - un moteur (7) ;
      - une machine électrique (6) actionnée par ledit moteur pour produire de l'énergie électrique ;
      - un convertisseur (18) pour transformer et alimenter l'énergie électrique produite par ladite machine électrique (6) ;

   b) une pompe à chaleur (22) électriquement alimentée par ledit cogénérateur (5) ;
   c) des moyens de commande (21) qui commandent ledit cogénérateur (5) et ladite pompe à chaleur (22) ;

   le procédé comprenant les étapes consistant à :

   - déterminer un point de fonctionnement du moteur (7) correspondant à une condition de fonctionnement souhaitée pour le système (1) ;
   - atteindre ledit point de fonctionnement en ajustant l'alimentation dudit moteur (7) en air/combustible et en commandant ledit convertisseur (18) de manière à faire varier le couple résistant exercé par ladite machine électrique (6) sur ledit moteur (7).

2. Procédé de commande selon la revendication 1, **caractérisé par** :

   a) la définition d'une exigence thermique (Qu) ;
   b) la détermination d'un premier point de consigne (Q1) correspondant à la chaleur que le moteur (7) doit distribuer (5), et d'un deuxième point de consigne (Q2) correspondant à la chaleur que la pompe à chaleur (22) doit distribuer, de manière à diviser la production de chaleur et répondre à ladite exigence thermique (Qu) ;
   c) la détermination dudit point de fonctionnement de manière à produire de la chaleur correspondant audit premier point de consigne (Q1).

**3.** Procédé de commande selon la revendication 2, **caractérisé en ce que** la production de chaleur est divisée selon un algorithme pour minimiser une fonction de coût total qui est définie par la somme des coûts en énergie et des gains dudit système (1) sur la base de taux pour la chaleur, l'énergie électrique et le combustible.

**4.** Procédé de commande selon la revendication 2 ou 3, **caractérisé en ce que** ladite exigence thermique est définie par une demande de chaleur instantanée (S4) par un utilisateur (12).

**5.** Procédé de commande selon la revendication 4, **caractérisé par** la variation continue de la vitesse de rotation dudit moteur (7), au moins dans des conditions de fonctionnement spécifiques, en fonction dudit premier point de consigne (Q1), en ajustant l'alimentation dudit moteur (7) et en commandant ledit convertisseur (18).

**6.** Procédé de commande selon la revendication 5, **caractérisé en ce que** ledit premier point de consigne (Q1) est déterminé de manière à produire de l'énergie électrique (Ecoge) au moins égale à celle requise pour alimenter ladite pompe à chaleur (22).

**7.** Procédé de commande selon la revendication 6, **caractérisé par** l'alimentation d'un utilisateur électrique (26) ou de cellules de stockage d'énergie électrique en énergie électrique produite par ledit cogénérateur (5) en excès par rapport à l'énergie électrique absorbée par ladite pompe à chaleur (22).

**8.** Procédé de commande selon l'une quelconque des revendications 2 à 7, **caractérisé par** :

> a) la détermination d'un point de consigne de l'énergie mécanique (Pm) que ledit moteur doit alimenter afin de fournir de la chaleur égale audit premier point de consigne (Q1) en fonction d'un rapport ($\beta$) d'énergies thermique et mécanique alimentées par ledit moteur (7) ;
> b) la détermination d'une vitesse de référence (V') qui correspondant audit point de consigne d'énergie mécanique (Pm) ;
> c) l'ajustement de l'alimentation dudit moteur (7) et la commande dudit convertisseur (18) de manière à obtenir une vitesse de rotation égale à ladite vitesse de référence (V').

**9.** Procédé de commande selon la revendication 8, **caractérisé en ce que** ledit rapport ($\beta$) d'énergies thermique et mécanique alimentées par ledit moteur (7) est un paramètre variable qui est optimisé en recherchant le minimum d'une fonction de coût total.

**10.** Procédé de commande selon l'une quelconque des revendications 2 à 9, **caractérisé par** le fonctionnement dudit moteur (7) avec des cycles de démarrage/arrêt si ledit premier point de consigne (Q1) correspond à une énergie sous un premier seuil.

**11.** Procédé de commande selon l'une quelconque des revendications 2 à 10, **caractérisé par** le fonctionnement de ladite pompe à chaleur (22) avec des cycles de démarrage/arrêt si ledit deuxième point de consigne (Q2) correspond à une énergie sous un deuxième seuil.

**12.** Procédé de commande selon l'une quelconque des revendications précédentes, **caractérisé par** la détermination du coefficient de performance (COP) de ladite pompe à chaleur (22) en fonction de valeurs de température environnementale.

**13.** Procédé de commande selon l'une quelconque des revendications précédentes, **caractérisé en ce que** ledit convertisseur (18) est du type bidirectionnel, et **caractérisé par** le démarrage dudit moteur (7) en utilisant ladite machine électrique (6) comme démarreur.

# FIG. 1

FIG. 2

EP 2 594 754 B1

13

# FIG. 3

**EP 2 594 754 B1**

**REFERENCES CITED IN THE DESCRIPTION**

**Patent documents cited in the description**

- EP 1628094 A
- WO 2009093181 A
- WO 2009093183 A